# FASCICULE DE BREVET EUROPEEN

(11) **EP 3 963 198 B1**
(45) Date de publication et mention de la délivrance du brevet: **08.11.2023**
(21) Numéro de dépôt: 20715881.7
(22) Date de dépôt: 03.04.2020
(51) Int. Cl.: F02K 1/72, F02C 7/24

(54) **GRILLE D'INVERSEUR DE POUSSÉE INCLUANT UN TRAITEMENT ACOUSTIQUE**
SCHUBUMKEHRKASKADE MIT AKUSTISCHER BEHANDLUNG
THRUST REVERSER CASCADE INCLUDING AN ACOUSTIC TREATMENT

(30) Priorité: 03.05.2019 FR 1904654
(43) Date de publication de la demande: 09.03.2022
(73) Titulaire: SAFRAN AIRCRAFT ENGINES, 75015 Paris (FR)
(72) Inventeur: JODET, Norman, Bruno, André, 77550 MOISSY-CRAMAYEL (FR); GONZALEZ, Jéremy, Paul, Francisco, 77550 MOISSY-CRAMAYEL (FR)
(74) Mandataire: Cabinet Beau de Loménie
(86) Numéro de dépôt international: PCT/EP2020/059560
(87) Numéro de publication internationale: WO 2020/224887

(56) Documents cités:
- FR-A1- 2 947 869
- US-A1- 2017 370 325
- US-A1- 2019 032 601

## Description

### Domaine Technique

L'invention concerne le traitement acoustique des ondes sonores émises par une turbomachine d'un aéronef, et plus particulièrement le traitement des ondes sonores au niveau des inverseurs de poussée de la turbomachine.

### Technique antérieure

Lorsqu'une turbomachine est en fonctionnement, l'interaction entre l'écoulement et les parties solides de la turbomachine sont responsables de la génération de bruits qui se propagent de part et d'autre de la turbomachine.

Un des moyens d'atténuer ce rayonnement acoustique est d'intégrer des moyens de traitement acoustique au niveau des surfaces en contacts avec les ondes sonores.

Classiquement, le traitement acoustique d'un turboréacteur, et plus précisément du bruit rayonné par l'interaction entre le rotor et son environnement, est fait à l'aide de panneaux absorbants disposés au niveau des surfaces mouillées du conduit dans lequel se propagent les ondes sonores. On entend par surfaces mouillées, les surfaces en contact avec un écoulement fluide. Ces panneaux sont généralement des matériaux composites de type sandwich emprisonnant un nid d'abeille formant des cellules d'absorption acoustique.

Il est connu par exemple dans l'état de la technique des panneaux acoustiques à un seul degré de liberté, ou SDOF pour « Single degree of freedom » en anglais, qui présentent une structure classique en nid d'abeilles de panneaux de traitement acoustique garnissant les parois de la nacelle d'une turbomachine.

De par le principe de fonctionnement des technologies de panneau de traitement acoustique utilisant des cavités résonnantes, l'encombrement radial, c'est-à-dire l'épaisseur radiale, des panneaux de traitement acoustique dépend de la fréquence de traitement ciblée pour obtenir un maximum d'efficacité en termes d'atténuation acoustique.

Cependant, les architectures moteurs présentent de plus en plus des vitesses de rotation des roues à aubes de plus en plus lentes et un nombre d'aubes sur les roues à aubes de plus en plus petit, ce qui entraîne une baisse des fréquences dominantes du bruit associé au module comprenant la soufflante et l'étage redresseur, ou module « fan-OGV » en anglais pour « Outlet Guide Vane ». De ce fait, l'adéquation entre l'épaisseur optimale des panneaux acoustiques et l'encombrement disponible dans les nacelles n'est, actuellement, pas satisfaite. Pour ralentir un aéronef, une turbomachine comprend généralement des inverseur de poussée. Il existe principalement deux technologies d'inverseurs de poussée qui sont basées sur l'action d'une grille. On distingue deux types d'inverseurs de poussée à grille : les inverseurs de poussée à grille fixe et les inverseurs de poussée à grille en liaison glissière. Une grille selon l'art antérieur est divulguée dans le document US2017370325.

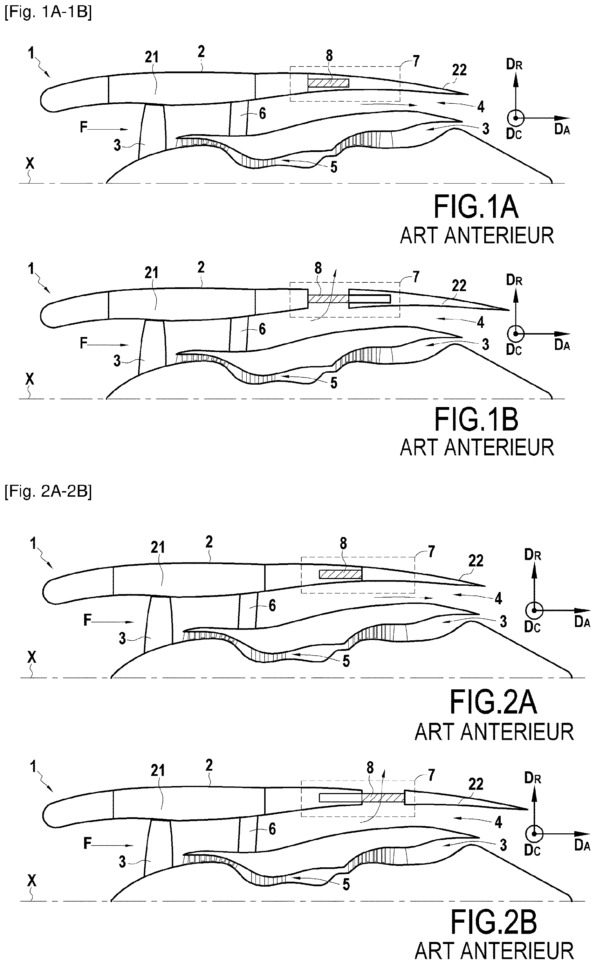

Sur les figures 1A et 1B sont présentées des vues schématiques en section dans un plan longitudinal d'une turbomachine 1 selon un premier mode de réalisation connu de l'état de la technique respectivement dans une position d'inversion de poussée inactivée et dans une position d'inversion de poussée activée.

La turbomachine 1 comprend une nacelle 2 à symétrie de révolution autour d'un axe X définissant une direction axiale D_{A}, une direction radiale D_{R} et une direction circonférentielle D_{C}, une soufflante 3, une veine primaire 4, une veine secondaire, un étage redresseur primaire 5, un étage redresseur secondaire 6, et un dispositif 7 d'inversion de poussée à grille comportant une grille 8.

Comme cela est illustrée sur les figures 1A et 1B qui représentent une turbomachine dotée d'un inverseur de poussée à grille fixe, dans les inverseurs de poussée à grille fixe, la grille 8 est encastrée, c'est-à-dire solidaire, avec une partie amont 21 de la nacelle 2 et en liaison glissière avec une partie aval 22 de la nacelle 2, l'amont et l'aval étant définis par rapport au sens d'écoulement d'un flux gazeux F dans la turbomachine 1. En se translatant vers l'aval, la partie aval 22 de la nacelle 2 découvre la grille 8 qui devient la seule interface entre l'écoulement interne à la nacelle 2 et le milieu ambiant dans lequel évolue la turbomachine 1.

Sur les figures 2A et 2B sont présentées des vues schématiques en section dans un plan longitudinal d'une turbomachine 1 selon un second mode de réalisation connu de l'état de la technique respectivement dans une position d'inversion de poussée inactive et dans une position d'inversion de poussée activée.

Comme cela est illustrée sur les figures 2A et 2B qui représentent une turbomachine 1 dotée d'un inverseur de poussée à grille en liaison glissière, dans les inverseurs de poussée à grille fixe, la grille 8 est en liaison glissière par rapport à la partie amont 21 de la nacelle 2 et en liaison d'encastrement par rapport à la partie aval 22 de la nacelle 2. En se translatant vers l'aval, la partie aval 22 de la nacelle 2 entraine la grille 8 hors de la nacelle 2 pour la positionner à l'interface entre l'écoulement interne à la nacelle 2 et le milieu ambiant.

Les inverseurs de poussée représentent à la fois, un coût, une masse et un encombrement très pénalisants pour les performances de l'ensemble propulsif, alors qu'ils sont utilisés seulement à la fin de la phase d'atterrissage. Le volume qu'ils utilisent dans la nacelle ne peut notamment pas être utilisé, dans l'état de l'art, pour le traitement acoustique des ondes sonores émises par la turbomachine.

Dans les architectures d'ensemble propulsif utilisant des inverseurs de poussée à portes qui se déploient à l'intérieur du flux secondaire pour dévier l'écoulement vers l'amont à l'extérieur de la nacelle, une pratique connue d'intégration de traitement acoustique classique consiste à intégrer des panneaux acoustiques dans des cavités des portes d'inverseur. Cette pratique consiste simplement à intégrer des panneaux absorbants classiques dans les volumes disponibles, comme cela est fait dans le carter fan.

### Exposé de l'invention

L'invention vise à fournir une grille d'un inverseur de poussée à grille qui permette, lorsque la grille est montée dans un inverseur de poussée d'une turbomachine, à la fois de réorienter un flux d'air vers l'amont de la turbomachine à l'extérieur de la nacelle, de minimiser les pertes de charge à travers la grille et de maximiser l'efficacité d'absorption acoustique.

Un objet de l'invention propose une grille pour un dispositif d'inversion de poussée destiné à être monté sur une turbomachine d'un aéronef, la grille comprenant des premières cloisons s'étendant dans une première direction, des secondes cloisons fixes s'étendant dans une deuxième direction orthogonale à la première direction, et un cadre à l'intérieur duquel s'étendent les premières et secondes cloisons, le cadre comportant au moins deux parois fixes s'étendant selon dans la première direction, et au moins une partie de chaque première cloison s'étendant entre deux secondes cloisons dans un plan comprenant les première et deuxième directions.

Selon une caractéristique générale de l'invention, au moins une première cloison est mobile selon la seconde direction entre une première position dans laquelle ladite au moins une première cloison est distante, dans la seconde direction, desdites parois fixes du cadre pour former une pluralité de cavités résonnantes avec les premières cloisons et les parois fixes du cadre, et une seconde position dans laquelle ladite au moins une première cloison est en contact avec une paroi fixe ou autre première cloison.

En général, dans l'état de l'art, le nombre de cellules diffère grandement entre une grille d'inverseur et un panneau acoustique. Cette différence est due aux propriétés recherchées qui ne sont pas les mêmes.

Une grille d'inverseur de poussée est habituellement caractérisée par une structure métallique, dimensionné de sorte à tenir la charge aérodynamique à laquelle elle est soumise en phase d'inversion de poussée. Cette structure génère également des pertes de charges. Une cellule est un volume constitué de quatre parois à travers lequel un fluide peut circuler. Disposer d'une densité de cellules trop importante peut nuire à l'efficacité de l'inverseur de poussée du fait d'une résistante trop forte au passage de l'air.

De l'autre côté, les structures de panneaux acoustiques ne subissent pas d'effort aérodynamique. Les cloisons qui les constituent sont très fines et leur faible volume permet d'optimiser la fréquence d'accord du panneau, c'est-à-dire la fréquence d'atténuation maximale.

Les deux fonctions d'inversion de poussée et de traitement acoustique font donc appel à des structures de cellule très différentes.

Les secondes cloisons sont destinées à être orientées selon une direction orthogonale à la direction d'écoulement d'un flux gazeux à l'intérieur d'une turbomachine comportant un dispositif d'inversion de poussée doté d'une telle grille. Lorsque la grille est montée sur un dispositif d'inversion de poussée sur une turbomachine, les secondes cloisons, orientées selon une direction azimutale ou radiale de la turbomachine, sont indispensables pour garantir la fonctionnalité d'inversion de poussée. C'est en effet grâce à ces secondes cloisons que le flux d'air circulant dans une veine, à l'intérieur de la nacelle dans laquelle le dispositif d'inversion de poussée est monté, peut être capté et réorienté vers l'amont de la turbomachine, par rapport au sens d'écoulement du flux à l'intérieur de la nacelle, à l'extérieur de la nacelle.

Les premières cloisons sont destinées à être orientées selon la direction du flux gazeux à l'intérieur d'une turbomachine comportant un dispositif d'inversion de poussée doté d'une telle grille. Lorsque la grille est montée sur un dispositif d'inversion de poussée sur une turbomachine, les premières cloisons, orientées selon une direction axiale de la turbomachine, ne sont pas indispensables pour la fonctionnalité d'inversion de poussée. En revanche, elles permettent la formation de cavités résonnantes permettant d'atténuer des ondes acoustiques générées par la turbomachine.

La mobilité selon la seconde direction d'au moins une première cloison de la grille selon l'invention offre la possibilité de modifier le nombre de cellules de la grille en fonction du mode de fonctionnement de la grille, pour avoir par exemple, pour un même volume donné compris dans la première direction entre deux secondes cloisons ou une seconde cloison et le cadre, une seule grande cellule ou bien au moins deux cellules plus petites en fonction du nombre de secondes cloisons mobiles. Autrement dit, la mobilité d'au moins une première cloison permet de faire varier le nombre de cellules pour limiter ce nombre en mode « inversion de poussée », et augmenter ce nombre en mode « traitement acoustique ».

Dans un premier aspect de la grille, chaque première cloison mobile peut comprendre des encoches conformées pour accueillir une seconde cloison et permettre le déplacement de ladite première cloison le long des secondes cloisons, et chaque encoche peut comprendre un joint permettant d'étanchéifier l'encoche.

Cette conformation permet d'améliorer la formation des cellules en cavités résonnantes lorsque la grille fonctionne en mode traitement acoustique en limitant les fuites acoustiques entre les cellules.

Dans un deuxième aspect de la grille, les joints des encoches peuvent être des joints à brosses ou à languettes.

Dans un troisième aspect de la grille, la grille peut comprendre au moins deux premières cloisons mobiles et au moins un système de translation de premières cloisons comportant un actionneur et au moins deux bielles comportant une première et une seconde extrémités, les secondes extrémités des bielles d'un même système de translation étant raccordées ensemble pour former une liaison pivot commune raccordée à l'actionneur, et la première extrémité de chaque bielle d'un même système de translation étant fixée en liaison pivotante à une première cloison mobile.

L'utilisation d'un même actionneur permet de minimiser le nombre d'actionneur nécessaire pour réaliser la fonction souhaitée.

Dans un quatrième aspect de la grille, la grille peut comprendre au moins une paire de systèmes de translation de premières cloisons, les systèmes de translation d'une même paire de systèmes étant raccordés aux mêmes premières cloisons mobiles.

L'utilisation de deux systèmes de translation pour déplacer une même ou les mêmes premières cloisons mobiles permet d'avoir deux points de fixation sur les premières cloisons mobiles et ainsi de réduire les contraintes mécaniques imposées sur un même point de fixation et de réduire les déformations des premières cloisons mobiles lors des translations.

Dans un cinquième aspect de la grille, ladite au moins une première cloison mobile peut comprendre, selon la première direction, une première et une seconde extrémités, les premières extrémités des bielles d'un premier système d'une paire de systèmes étant fixées en liaison pivotante aux premières extrémités de premières cloisons mobiles et les premières extrémités des bielles d'un second système de la même paire de systèmes étant fixées en liaison pivotante aux secondes extrémités des mêmes premières cloisons mobiles.

Le raccordement des systèmes de translation d'une même paire de systèmes aux deux extrémités des premières cloisons mobiles de la grille permet de faciliter les translations, en minimisant les contraintes de flexion dans les cloisons mobiles.

Dans un sixième aspect de la grille, les actionneurs des systèmes de translation d'une même paire de systèmes de translation peuvent être mécaniquement raccordés ensemble.

Le raccordement des actionneurs des systèmes de translation d'une même paire de systèmes de translation permet d'obtenir une synchronisation précise des contraintes de flexion dans les premières cloisons mobiles et des efforts de frottement.

Dans un septième aspect de la grille, les bielles raccordées à des premières cloisons disposées entre deux parois fixes successivement disposées dans la seconde direction ont une longueur comprise entre une demie fois et une fois la distance séparant lesdites deux parois fixes successives.

Dans un huitième aspect de la grille, plus de deux premières cloisons mobiles sont disposées entre deux parois fixes successivement disposées dans la seconde direction, et les bielles raccordées à des premières cloisons disposées entre lesdites deux parois fixes successives ont des longueurs différentes les unes des autres.

Dans un neuvième aspect de la grille, l'actionneur dudit au moins un système de translation peut être un actionneur pneumatique ou électrique configuré pour écarter les premières cloisons mobiles l'une de l'autre jusqu'à la première position ou les rapprocher l'une de l'autre jusqu'à la seconde position.

Dans une dixième aspect de la grille, l'épaisseur des premières cloisons peut être comprise entre 0,5 mm et 4 mm pour être les plus fines possible pour minimiser la masse et les pertes de charge dans la grille. L'épaisseur des premières cloisons est mesurée selon la seconde direction.

Dans un onzième aspect de la grille, la grille peut comprendre des butées positionnées sur la grille pour arrêter la translation des premières cloisons mobiles dans la première position pour obtenir un positionnement précis.

Dans un autre objet de l'invention, il est proposé un dispositif d'inversion de poussée à grille pour une turbomachine d'un aéronef, caractérisé en ce qu'il comprend au moins une grille telle que définie ci-dessus.

Dans un premier aspect du dispositif d'inversion de poussée, l'actionneur dudit au moins un système de translation est configuré pour écarter les premières cloisons mobiles l'une de l'autre jusqu'à la première position ou les rapprocher l'une de l'autre jusqu'à la seconde position de manière synchronisée avec le déclenchement du dispositif d'inversion de poussée.

La synchronisation de l'actionneur avec le déclenchement du dispositif d'inversion de poussée permet d'exercer un effort de translation sur l'ensemble des points de liaison permettant de déployer ou de replier la structure de cloisons mobile en fonction du mode de fonctionnement du dispositif d'inversion de poussée, le dispositif d'inversion de poussée pouvant être inactif, c'est-à-dire dans un mode de traitement acoustique, ou actif, c'est-à-dire dans un mode d'inversion de poussée.

Dans encore un autre objet de l'invention, il est proposé une turbomachine destinée à être montée sur un aéronef, la turbomachine comprenant une nacelle à symétrie de révolution définissant une direction axiale et une direction radiale, la nacelle comportant une épaisseur selon la direction radiale et un logement s'étendant selon la direction axiale dans son épaisseur pour recevoir une grille d'un dispositif d'inversion de poussée à grille.

Selon une caractéristique générale de cet objet de l'invention, la turbomachine peut comprendre un dispositif d'inversion de poussée à grille tel que défini ci-dessus, la grille étant disposée, lorsque l'inversion de poussée n'est pas requise, dans le logement correspondant de la nacelle de la turbomachine avec les première cloisons s'étendant selon la direction axiale et la direction radiale et les secondes cloisons s'étendant selon la direction radiale et selon une direction orthogonale à la direction axiale et à la direction radiale, la première direction correspondant à la direction axiale.

Dans un mode de réalisation de la turbomachine, la nacelle peut comprendre une paroi perforée formant une paroi radialement interne du logement et une paroi réfléchissante formant une paroi radialement externe du logement.

Dans un autre objet de l'invention, il est proposé un aéronef comprenant au moins une turbomachine telle que définie ci-dessus.

### Brève description des dessins

[Fig. 1A-1B] Les figures 1A et 1B, déjà décrites, présentent des vues schématiques en section dans un plan longitudinal d'une turbomachine selon un premier mode de réalisation connu de l'état de la technique respectivement dans une position d'inversion de poussée inactive et dans une position d'inversion de poussée activée.
[Fig. 2A-2B] Les figures 2A et 2B, déjà décrites, présentent des vues schématiques en section dans un plan longitudinal d'une turbomachine selon un second mode de réalisation connu de l'état de la technique respectivement dans une position d'inversion de poussée inactive et dans une position d'inversion de poussée activée.

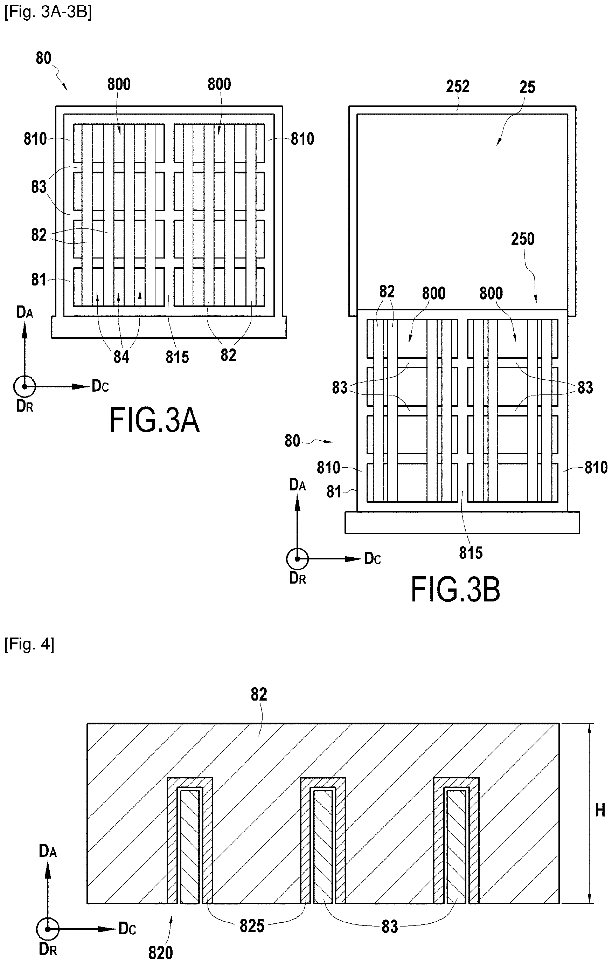

[Fig. 3A-3B] Les figures 3A et 3B présentent des vues schématiques en section selon un plan comprenant la direction axiale et orthogonale à la direction radiale d'une grille d'un dispositif d'inversion de poussée pour une turbomachine selon un premier mode de réalisation de l'invention respectivement dans une position d'inversion de poussée inactive et dans une position d'inversion de poussée activé.
[Fig. 4] La figure 4 présente une vue schématique en section selon un plan comprenant la direction axiale et la direction radiale d'une grille d'un dispositif d'inversion de poussée pour une turbomachine selon un mode de réalisation de l'invention.

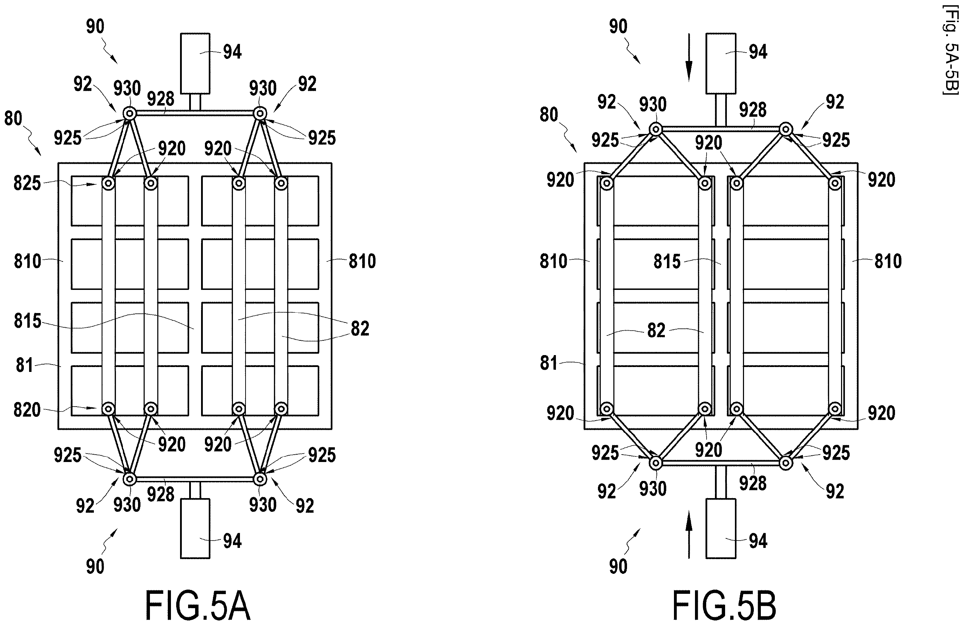

[fig. 5A-5B] Les figures 5A et 5B présentent des vues schématiques en section selon un plan comprenant la direction axiale et orthogonale à la direction radiale d'une grille d'un dispositif d'inversion de poussée pour une turbomachine selon un second mode de réalisation de l'invention respectivement dans une position d'inversion de poussée inactive et dans une position d'inversion de poussée activé.

### Description des modes de réalisation

Sur les figures 3A et 3B sont représentées des vues schématiques en section selon un plan comprenant la direction axiale et orthogonale à la direction radiale d'une grille d'un dispositif d'inversion de poussée d'une turbomachine selon un mode de réalisation de l'invention respectivement dans une position d'inversion de poussée inactive et dans une position d'inversion de poussée activé.

La turbomachine comprend un dispositif d'inversion de poussée pouvant fonctionner selon le fonctionnement décrit sur les figures 1A et 1B ou selon le fonctionnement décrit sur les figures 2A et 2B.

Le dispositif d'inversion de poussée comprend une pluralité de grilles 80 assemblées pour former une couronne grillagée. Chaque grille 80 comprend un cadre 81 à l'intérieur duquel s'étendent des premières cloisons 82 dans une première direction et des secondes cloisons 83 dans une deuxième direction orthogonale à la première direction.

En outre, comme illustré sur les figures 3A et 3B, dans la première direction, le cadre comprend deux parois fixes latérales 810 et une paroi fixe centrale 815, divisant ainsi la grille en deux zones rectangulaires 800 ayant dans la deuxième direction une longueur égale à la moitié de la longueur du cadre 81.

Comme cela est illustré sur la figure 4 qui présente une vue schématique en section, selon un plan comprenant la première direction et une troisième direction orthogonale aux première et deuxième direction, de la grille 80 des figures 3A et 3B, le cadre 81 et les premières et secondes cloisons 82 et 83 s'étendent dans une troisième direction orthogonales aux première et seconde directions. Les premières cloisons 82 possèdent une hauteur *H* comprise entre 10 mm et 300 mm.

Comme cela est également illustré sur la figure 4, chacune des premières cloisons 82 comprend des encoches 820 conformées pour accueillir une des secondes cloisons 83. Les premières cloisons 82 comprennent en outre, dans chacune des encoches 820, un joint 825 à brosses ou à languettes montés sur la première cloison 82.

L'épaisseur des premières cloisons 83 est comprise entre 0,5 mm et 4 mm pour être les plus fines possible pour minimiser la masse et les pertes de charge dans la grille.

Lorsque le dispositif d'inversion de poussée est monté sur une turbomachine telles que celles illustrées sur les figures 1A, 1B, 2A, 2B, la première direction correspond à la direction axiale D_{A} de la turbomachine 1, la deuxième direction correspond à la direction circonférentielle D_{C} de la turbomachine 1, et la troisième direction correspond à la direction radiale D_{R} de la turbomachine 1.

Les secondes cloisons 83 sont des cloisons azimutales destinées à orienter le flux gazeux F vers l'extérieur de la nacelle 2 et en amont de la turbomachine 1 pour l'inversion de poussée lorsque le dispositif d'inversion de poussée est activée. Les premières cloisons 82 sont des cloisons axiales destinées à définir, avec les secondes cloisons 83, des cavités résonnantes 84 pour l'absorption des ondes acoustiques générées par la turbomachine, lorsque le dispositif d'inversion de poussée est inactif.

Comme cela est illustré sur les figures 3A et 3B, les premières cloisons 82 sont déplaçables le long des secondes cloisons 83, c'est-à-dire selon la deuxième direction D_{C}, entre une première position illustrée sur la figure 3A dans laquelle les secondes cloisons 83 sont régulièrement espacées les unes des autres selon la deuxième direction D_{C} pour former une pluralité de cavités résonnantes 84, et une seconde position illustrée sur la figure 3B dans laquelle les premières cloisons 82 sont repliées en groupe égaux contre les parois fixes 810 et 815 de leur zone rectangulaire 800 pour n'avoir qu'une seule cellule s'étendant dans la première direction D_{A} entre deux secondes cloisons 83 ou bien entre une seconde cloison 83 et le cadre 81.

Sur l'exemple illustré sur les figures 3A et 3B, dans la seconde position, dans chaque zone rectangulaire 800, deux premières cloisons mobiles 82 sont disposées contre la paroi fixe latérale 810 et deux premières cloisons mobiles 82 sont disposées contre la paroi fixe centrale 815. Dans la première position, dans chaque zone rectangulaire 800, les quatre premières cloisons mobiles 82 sont régulièrement réparties dans la deuxième direction pour former, avec les secondes cloisons 83, des cavités résonnantes 84 identiques.

La figure 3B illustre la grille 80 dans une position active de l'inverseur de poussée, c'est-à-dire dans une position où la grille 80 est sortie d'un logement 25 prévu dans l'épaisseur de la nacelle 2 pour recevoir la grille 80 lorsque l'inverseur de poussée est inactif. Le logement 25 comprend une ouverture 250 permettant l'insertion de la grille 80 dans le logement 25 selon la direction axiale D_{A}, une paroi de fond 252 s'étendant dans la direction radiale D_{R} à l'opposé de l'ouverture 250, et une paroi perforée et une paroi réfléchissante parallèle l'une à l'autre et s'étendant dans la direction axiale D_{A} et dans la direction circonférentielle D_{C}. La paroi perforée et la paroi réfléchissante ne sont pas visibles sur les figures 3A et 3B étant donné que ces figures sont des vues en section. La paroi perforée est radialement à l'intérieur de la paroi réfléchissante. Les parois perforée et réfléchissante permettent ainsi, lorsque la grille est insérée dans le logement de former des cavités résonnantes de type résonateur de Helmholtz doté d'un volume et d'un col formé par chacune des ouvertures de la paroi perforée.

Sur les figures 5A et 5B sont présentées des vues schématiques en section selon un plan comprenant la direction axiale et orthogonale à la direction radiale d'une grille d'un dispositif d'inversion de poussée pour une turbomachine selon un second mode de réalisation de l'invention respectivement dans une position d'inversion de poussée inactive et dans une position d'inversion de poussée activé.

Dans ce mode de réalisation, chaque zone rectangulaire 800 comprend deux premières cloisons 82 mobiles. Les zones rectangulaires 800 pourraient comprendre un nombre paire plus grand de premières cloisons 82 mobiles.

Dans le second mode de réalisation illustré sur les figures 5A et 5B, la grille 80 comprend un premier et un second système de translation 90 commandant le déplacement dans la deuxième direction D_{C} des deux premières cloisons 82 mobiles. Les deux systèmes de translation 90 sont couplés ensemble pour être actionnés ensemble de manière synchronisée. Ils sont également synchronisés avec le dispositif d'inversion de poussée, pour déplacer les premières cloisons 82 mobiles dans la première position lorsque le dispositif d'inversion de poussée passe dans un mode inactif, c'est-à-dire dans un mode de fonctionnement propre au traitement acoustique des ondes sonores émises par la turbomachine, ou dans la seconde position lorsque le dispositif d'inversion de poussée passe dans un mode actif, c'est-à-dire dans un mode de fonctionnement d'inversion de poussée.

Chaque système de translation 90 comprend des bielles 92 et un actionneur 94. Chaque bielle 92 comprend une première extrémité 920 couplée en liaison pivotante à une extrémité, selon la première direction D_{A}, d'une première cloison 82 mobile. Chaque première cloison 82 comprend, dans la première direction D_{A}, une première extrémité 820 et une seconde extrémité 825. La première extrémité 920 des bielles 92 du premier système de translation 90 sont raccordées en liaison pivotante à la première extrémité 820 des premières cloisons 82 mobiles et la première extrémité 920 des bielles 92 du second système de translation 90 sont raccordées en liaison pivotante à la seconde extrémité 825 des premières cloisons 82 mobiles.

Chaque bielle 92 comprend une seconde extrémité 925 opposée à la première extrémité 920. La seconde extrémité 925 de chacune des bielles 92 d'un système de translation 90 sont mécaniquement raccordées ensemble pour les rendre solidaire de l'actionneur 94.

Dans l'exemple illustré sur les figures 5A et 5B, chaque système de translation 90 comprend deux premières et deux secondes bielles 92. Les secondes extrémités 925 des deux premières bielles 92 sont raccordées ensemble en une première liaison pivotante commune 930, et les secondes extrémités 925 des deux secondes bielles 92 sont raccordées ensemble en une seconde liaison pivotante commune 930. Les deux liaisons pivotantes communes 930 sont couplées à l'actionneur 94 via une barre de liaison 928.

L'actionneur 94 du premier système de translation 90 et l'actionneur 94 du second système de translation 90 sont couplés ensemble, si bien que, lorsque les actionneurs 94 sont activés, suite à une requête de passage en inversion de poussée, chaque actionneur 94 pousse la barre de liaison 928 vers le cadre 81 la grille 80, autrement dit les actionneurs 94 des deux systèmes de translation 90 poussent les deux barres de liaison 928 l'une vers l'autre.

Cette action entraîne le déploiement des bielles 92, c'est-à-dire l'éloignement des premières extrémités 920 l'une de l'autre des bielles ayant leur seconde extrémité 925 raccordées ensemble en une même liaison pivotante commune 930. Ce déploiement des bielles 92 entraînent le déplacement de chacune des deux premières cloisons mobiles 82 vers une paroi fixe 810 ou 815.

Lorsque les actionneurs 94 sont désactivés, suite à une requête de fin d'inversion de poussée, chaque actionneur 94 retire la barre de liaison 928 dans une direction opposée au cadre 81 la grille 80, autrement dit les actionneurs 94 des deux systèmes de translation 90 écartent les deux barres de liaison 928 l'une de l'autre.

Cette action entraîne la contraction des bielles 92, c'est-à-dire le rapprochement des premières extrémités 920 l'une de l'autre des bielles ayant leur seconde extrémité 925 raccordées ensemble en une même liaison pivotante commune 930. Ce rapprochement des bielles 92 entraînent l'éloignement de chacune des deux premières cloisons mobiles 82 des parois fixe 810 ou 815 jusqu'à former, avec les secondes cloisons 83 des cavités résonnantes de même volume.

L'invention fournit ainsi une grille d'un inverseur de poussée à grille qui permette, lorsque la grille est montée dans un inverseur de poussée d'une turbomachine, à la fois de réorienter un flux d'air vers l'amont de la turbomachine à l'extérieur de la nacelle, de minimiser les pertes de charge à travers la grille et de maximiser l'efficacité d'absorption acoustique.

## Revendications

1. Grille (80) pour un dispositif d'inversion de poussée destiné à être monté sur une turbomachine d'un aéronef, la grille (80) comportant des premières cloisons (82) s'étendant dans une première direction (D_{A}), des secondes cloisons (83) fixes s'étendant dans une deuxième direction (D_{C}) orthogonale à la première direction (D_{A}), et un cadre (81) à l'intérieur duquel s'étendent les premières et secondes cloisons (82, 83), le cadre (81) comportant au moins deux parois fixes (810, 815) s'étendant selon dans la première direction (D_{A}), et au moins une partie de chaque première cloison (82) s'étendant entre deux secondes cloisons (83) dans un plan comprenant les première et deuxième directions (D_{A}, D_{C}), dans laquelle au moins une première cloison (82) est mobile selon la seconde direction (D_{C}) entre une première position dans laquelle ladite au moins une première cloison (82) est distante, dans la seconde direction (D_{C}), desdites parois fixes (810, 815) du cadre (81) pour former une pluralité de cavités résonnantes (84) avec les premières cloisons (83) et/ou les parois fixes (810, 815) du cadre (81), et une seconde position dans laquelle ladite au moins une première cloison (82) est en contact avec une paroi fixe (810, 815) du cadre (81) ou une autre première cloison (82).

2. Grille (80) selon la revendication 1, dans laquelle chaque première cloison (82) mobile comprend des encoches (820) conformées pour accueillir une seconde cloison (83) et permettre le déplacement de ladite première cloison (82) le long des secondes cloisons (83), et chaque encoche (820) comprend un joint (825) permettant d'étanchéifier l'encoche (820).

3. Grille (80) selon la revendication 2, dans laquelle les joints (825) des encoches (820) sont des joints à brosses ou à languettes.

4. Grille (80) selon l'une des revendications 1 à 3, comprenant en outre au moins deux premières cloisons (82) mobiles et au moins un système de translation (90) de premières cloisons (82) comportant un actionneur (94) et au moins deux bielles (92) comportant une première et une seconde extrémités (920, 925), les secondes extrémités (925) des bielles (92) d'un même système de translation (90) étant raccordées ensemble via au moins une liaison pivot commune (930) raccordée à l'actionneur (94), et la première extrémité (920) de chaque bielle (92) d'un même système de translation (90) étant fixée en liaison pivotante à une première cloison (82) mobile.

5. Grille (80) selon la revendication 4, comprenant en outre au moins une paire de systèmes de translation(90) de premières cloisons (82), les systèmes de translation (90) d'une même paire de systèmes étant raccordés aux mêmes premières cloisons (82) mobiles.

6. Grille (80) selon la revendication 5, dans laquelle ladite au moins une première cloison (2) mobile comprend, selon la première direction (D_{A}), une première et une seconde extrémités (820, 825), les premières extrémités (920) des bielles (92) d'un premier système de translation (90) d'une paire de systèmes de translation étant fixées en liaison pivotante aux premières extrémités (820) de premières cloisons (82) mobiles et les premières extrémités (920) des bielles (92) d'un second système de translation (90) de la même paire de systèmes de translation étant fixées en liaison pivotante aux secondes extrémités (825) des mêmes premières cloisons (82) mobiles.

7. Grille (80) selon l'une des revendications 5 ou 6, dans laquelle les actionneurs (94) des systèmes de translation (90) d'une même paire de systèmes de translation sont mécaniquement raccordés ensemble.

8. Grille (80) selon l'une des revendications 4 à 7, dans laquelle les bielles (92) raccordées à des premières cloisons (82) disposées entre deux parois fixes (810, 815) successivement disposées dans la seconde direction (D_{C}) ont une longueur comprise entre une demie fois et une fois la distance séparant lesdites deux parois fixes (810, 815) successives.

9. Grille (80) selon l'une des revendications 4 à 8, dans laquelle plus de deux premières cloisons (82) mobiles sont disposées entre deux parois fixes (810, 815) successivement disposées dans la seconde direction (D_{C}), et les bielles (92) raccordées à des premières cloisons (82) disposées entre lesdites deux parois fixes (810, 815) successives ont des longueurs différentes les unes des autres.

10. Grille selon l'une des revendications 4 à 9, dans laquelle l'actionneur (94) dudit au moins un système de translation (90) est un actionneur pneumatique ou électrique configuré pour écarter les premières cloisons (82) mobiles l'une de l'autre jusqu'à la première position ou les rapprocher l'une de l'autre jusqu'à la seconde position

11. Grille (80) selon l'une des revendications 1 à 10, dans laquelle l'épaisseur des premières cloisons (82) est comprise entre 0,5 mm et 4 mm, l'épaisseur des premières cloisons (82) étant mesurée selon la seconde direction (D_{C}).

12. Grille selon l'une des revendications 1 à 11, comprenant en outre des butées positionnées sur la grille (80) pour arrêter la translation des premières cloisons (82) mobiles dans la première position.

13. Dispositif d'inversion de poussée à grille pour une turbomachine d'un aéronef, **caractérisé en ce qu'**il comprend au moins une grille (80) selon l'une des revendications 1 à 12.

14. Dispositif d'inversion de poussée à grille selon la revendication 13, dans lequel l'actionneur (94) dudit au moins un système de translation (90) est configuré pour écarter les premières cloisons (82) mobiles l'une de l'autre jusqu'à la première position ou les rapprocher l'une de l'autre jusqu'à la seconde position de manière synchronisée avec le déclenchement du dispositif d'inversion de poussée.

15. Turbomachine (1) destinée à être montée sur un aéronef, la turbomachine (1) comprenant une nacelle (2) à symétrie de révolution définissant une direction axiale (D_{A}) et une direction radiale (D_{R}), la nacelle (2) comportant une épaisseur selon la direction radiale (D_{R}) et un logement (25) s'étendant selon la direction axiale (D_{A}) dans son épaisseur pour recevoir une grille (80) d'un dispositif d'inversion de poussée à grille, **caractérisée en ce qu'**elle comprend un dispositif d'inversion de poussée à grille selon la revendication 13, la grille (80) étant disposée, lorsque l'inversion de poussée n'est pas requise, dans le logement (25) correspondant de la nacelle (2) de la turbomachine (1) avec les première cloisons (82) s'étendant selon la direction axiale (D_{A}) et la direction radiale (D_{R}) et les secondes cloisons (83) s'étendant selon la direction radiale (D_{R}) et selon une direction orthogonale à la direction axiale (D_{A}) et à la direction radiale (D_{R}), la première direction correspondant à la direction axiale(D_{A}).

16. Turbomachine (1) selon la revendication 15, dans laquelle la nacelle (2) comprend une paroi perforée (254) formant une paroi radialement interne du logement (25) et une paroi réfléchissante (256) formant une paroi radialement externe du logement (25).

17. Aéronef comprenant au moins une turbomachine (1) selon l'une des revendications 15 ou 16.

## Patentansprüche

1. Gitter (80) für eine Schubumkehrvorrichtung, die zur Anbringung an einer Turbomaschine eines Fluggeräts bestimmt ist, wobei das Gitter (80) erste Trennwände (82) aufweist, die sich in einer ersten Richtung (D_{A}) erstrecken, feste zweite Trennwände (83), die sich in einer zweiten, zur ersten Richtung (D_{A}) orthogonalen Richtung (D_{C}) erstrecken, und einen Rahmen (81), in dem sich die ersten und zweiten Trennwände (82, 83) erstrecken, wobei der Rahmen (81) mindestens zwei feste Wände (810, 815) aufweist, die sich in der ersten Richtung (D_{A}) erstrecken, und mindestens einen Teil jeder ersten Trennwand (82), der sich zwischen zwei zweiten Trennwänden (83) in einer Ebene erstreckt, die die erste und zweite Richtung (D_{A}, D_{C}) umfasst,
wobei mindestens eine erste Trennwand (82) in der zweiten Richtung (D_{C}) zwischen einer ersten Position, in der die mindestens eine erste Trennwand (82) in der zweiten Richtung (D_{C}) von den festen Wänden (810, 815) des Rahmens (81) entfernt ist, um eine Vielzahl von Resonanzhohlräumen (84) mit den ersten Trennwänden (83) und/oder den festen Wänden (810, 815) des Rahmens (81) zu bilden, und einer zweiten Position, in der die mindestens eine erste Trennwand (82) mit einer festen Wand (810, 815) des Rahmens (81) oder einer anderen ersten Trennwand (82) im Kontakt ist, beweglich ist.

2. Gitter (80) nach Anspruch 1, wobei jede bewegliche erste Trennwand (82) Schlitze (820) umfasst, die eingerichtet sind, um eine zweite Trennwand (83) zu empfangen und die Verlagerung der ersten Trennwand (82) entlang der zweiten Trennwände (83) zu gestatten, und jeder Schlitz (820) eine Dichtung (825) umfasst, die erlaubt, den Schlitz (820) abzudichten.

3. Gitter (80) nach Anspruch 2, wobei die Dichtungen (825) der Schlitze (820) Bürsten- oder Zungendichtungen sind.

4. Gitter (80) nach einem der Ansprüche 1 bis 3, das ferner mindestens zwei bewegliche erste Trennwände (82) und mindestens ein Translationssystem (90) erster Trennwände (82) umfasst, das einen Aktuator (94) und mindestens zwei Pleuelstangen (92) aufweist, die ein erstes und ein zweites Ende (920, 925) aufweisen, wobei die zweiten Enden (925) der Pleuelstangen (92) desselben Translationssystems (90) gemeinsam über mindestens eine gemeinsame Drehzapfenverbindung (930), die an den Aktuator (94) angeschlossen ist, angeschlossen sind, und das erste Ende (920) jeder Pleuelstange (92) desselben Translationssystems (90) in Drehzapfenverbindung an einer beweglichen ersten Trennwand (82) befestigt ist.

5. Gitter (80) nach Anspruch 4, das ferner mindestens ein Paar Translationssysteme (90) erster Trennwände (82) umfasst, wobei die Translationssysteme (90) desselben Systempaars an dieselben beweglichen ersten Trennwände (82) angeschlossen sind.

6. Gitter (80) nach Anspruch 5, wobei die mindestens eine bewegliche erste Trennwand (2) in der ersten Richtung (D_{A}) ein erstes und ein zweites Ende (820, 825) umfasst, wobei die ersten Enden (920) der Pleuelstangen (92) eines ersten Translationssystems (90) eines Translationssystempaars in Drehzapfenverbindung an den ersten Enden (820) beweglicher erster Trennwände (82) befestigt sind und die ersten Enden (920) der Pleuelstangen (92) eines zweiten Translationssystems (90) desselben Translationssystempaars in Drehzapfenverbindung an den zweiten Enden (825) derselben beweglichen ersten Trennwände (82) befestigt sind.

7. Gitter (80) nach einem der Ansprüche 5 oder 6, wobei die Aktuatoren (94) der Translationssysteme (90) desselben Translationssystempaars miteinander mechanisch angeschlossen sind.

8. Gitter (80) nach einem der Ansprüche 4 bis 7, wobei die Pleuelstangen (92), die an ersten Trennwänden (82) angeschlossen sind, die zwischen zwei festen Wänden (810, 815) angeordnet sind, die nacheinander in der zweiten Richtung (D_{C}) angeordnet sind, eine Länge haben, die zwischen einem halben Mal und einem Mal des Abstands liegt, der die aufeinanderfolgenden zwei festen Wände (810, 815) trennt.

9. Gitter (80) nach einem der Ansprüche 4 bis 8, wobei mehr als zwei bewegliche erste Trennwände (82) zwischen zwei festen Wänden (810, 815) angeordnet sind, die nacheinander in der zweiten Richtung (D_{C}) angeordnet sind, und die Pleuelstangen (92), die an den ersten Trennwänden (82) angeschlossen sind, die zwischen den aufeinanderfolgenden zwei festen Wänden (810, 815) angeordnet sind, voneinander unterschiedliche Längen haben.

10. Gitter nach einem der Ansprüche 4 bis 9, wobei der Aktuator (94) des mindestens einen Translationssystems (90) ein pneumatischer oder elektrischer Aktuator ist, der ausgelegt ist, um die beweglichen ersten Trennwände (82) voneinander bis zur ersten Position zu beabstanden oder sie bis zur zweiten Position aneinander anzunähern.

11. Gitter (80) nach einem der Ansprüche 1 bis 10, wobei die Dicke der ersten Trennwände (82) zwischen 0,5 mm und 4 mm liegt, wobei die Dicke der ersten Trennwände (82) in der zweiten Richtung (D_{C}) gemessen wird.

12. Gitter nach einem der Ansprüche 1 bis 11, das ferner Anschläge umfasst, die auf dem Gitter (80) positioniert sind, um die Translation der beweglichen ersten Trennwände (82) in die erste Position zu stoppen.

13. Schubumkehrvorrichtung mit Gitter für eine Turbomaschine eines Fluggeräts, **dadurch gekennzeichnet, dass** sie mindestens ein Gitter (80) nach einem der Ansprüche 1 bis 12 umfasst.

14. Schubumkehrvorrichtung mit Gitter nach Anspruch 13, wobei der Aktuator (94) des mindestens einen Translationssystems (90) ausgelegt ist, um die beweglichen ersten Trennwände (82) voneinander bis zur ersten Position zu beabstanden oder sie mit der Auslösung der Schubumkehrvorrichtung bis zur zweiten Position synchronisiert aneinander anzunähern.

15. Turbomaschine (1), die zur Anbringung an einem Fluggerät bestimmt ist, wobei die Turbomaschine (1) eine Gondel (2) mit Drehsymmetrie umfasst, die eine axiale Richtung (D_{A}) und eine radiale Richtung (D_{R}) festlegt, wobei die Gondel (2) eine Dicke in der radialen Richtung (D_{R}) aufweist und eine Aufnahme (25), die sich in der axialen Richtung (D_{A}) in ihrer Dicke erstreckt, um ein Gitter (80) einer Schubumkehrvorrichtung mit Gitter zu empfangen,
**dadurch gekennzeichnet, dass** sie eine Schubumkehrvorrichtung mit Gitter nach Anspruch 13 umfasst, wobei das Gitter (80), wenn die Schubumkehr nicht erforderlich ist, in der entsprechenden Aufnahme (25) der Gondel (2) der Turbomaschine (1) angeordnet ist, mit den ersten Trennwänden (82), die sich in der axialen Richtung (D_{A}) und der radialen Richtung (D_{R}) erstrecken, und den zweiten Trennwände (83), die sich in der radialen Richtung (D_{R}) und in einer orthogonalen Richtung zur axialen Richtung (D_{A}) und zur radialen Richtung (D_{R}) erstrecken, wobei die erste Richtung der axialen Richtung (D_{A}) entspricht.

16. Turbomaschine (1) nach Anspruch 15, wobei die Gondel (2) eine perforierte Wand (254) umfasst, die eine radial innere Wand der Aufnahme (25) bildet und eine reflektierende Wand (256), die eine radial äußere Wand der Aufnahme (25) bildet.

17. Fluggerät, das mindestens eine Turbomaschine (1) nach einem der Ansprüche 15 oder 16 umfasst.

## Claims

1. A cascade (80) for a thrust reversal device intended to be mounted on a turbomachine of an aircraft, the cascade (80) comprising first partitions (82) extending in a first direction (D_{A}), second fixed partitions (83) extending in a second direction (D_{C}) orthogonal to the first direction (D_{A}), and a frame (81) inside which the first and second partitions extend (82, 83), the frame (81) comprising at least two fixed walls (810, 815) extending according to the first direction (D_{A}), and at least one part of each first partition (82) extending between two second partitions (83) in a plane comprising the first and second directions (D_{A}, D_{C}),
wherein at least one first partition (82) is mobile according to the second direction (D_{C}) between a first position in which said at least one first partition (82) is distant, in the second direction (D_{C}), from said fixed walls (810, 815) of the frame (81) to form a plurality of resonating cavities (84) with the first partitions (83) and/or the fixed walls (810, 815) of the frame (81), and a second position in which said at least one first partition (82) is in contact with a fixed wall (810, 815) of the frame (81) or another first partition (82).

2. The cascade (80) according to claim 1, wherein each first mobile partition (82) comprises notches (820) configured to house a second partition (83) and allow said first partition (82) to move along the second partitions (83), and each notch (820) comprises a seal (825) for sealing the notch (820).

3. The cascade (80) according to claim 2, wherein the seals (825) of the notches (820) are brush seals or tongue seals.

4. The cascade (80) according to any one of claims 1 to 3, also comprising at least two first mobile partitions (82) and at least one translation system (90) of first partitions (82) comprising an actuator (94) and at least two tie rods (92) comprising a first and second ends (920, 925), the second ends (925) of the tie rods (92) of the same translation system (90) being connected together via at least one common pivot link (930) connected to the actuator (94), and the first end (920) of each tie rod (92) of the same translation system (90) being fixed as a pivoting link to a first mobile partition (82).

5. The cascade (80) according to claim 4, also comprising at least one pair of translation systems (90) of first partitions (82), the translation systems (90) of the same pair of systems being connected to the same first mobile partitions (82).

6. The cascade (80) according to claim 5, wherein said at least one first mobile partition (2) comprises, according to the first direction (D_{A}), a first and second ends (820, 825), the first ends (920) of the tie rods (92) of a first translation system (90) of a pair of translation systems being fixed as a pivoting link to the first ends (820) of first mobile partitions (82) and the first ends (920) of the tie rods (92) of a second translation system (90) of the same pair of translation systems being fixed as a pivoting link to the second ends (825) of the same first mobile partitions (82).

7. The cascade (80) according to any one of claims 5 or 6, wherein the actuators (94) of the translation systems (90) of the same pair of translation systems are connected together mechanically.

8. The cascade (80) according to any one of claims 4 to 7, wherein the tie rods (92) connected to first partitions (82) arranged between two fixed walls (810, 815) successively arranged in the second direction (D_{C}) have a length between a half and all the distance separating said two successive fixed walls (810, 815).

9. The cascade (80) according to any one of claims 4 to 8, wherein more than two first mobile partitions (82) are arranged between two fixed walls (810, 815) successively arranged in the second direction (D_{C}), and the tie rods (92) connected to first partitions (82) arranged between said two successive fixed walls (810, 815) have lengths different to each other.

10. The cascade according to any one of claims 4 to 9, wherein the actuator (94) of the at least one translation system (90) is a pneumatic or electrical actuator configured to move the first mobile partitions (82) away from each other as far as the first position or move them more closely to each other as far as the second position.

11. The cascade (80) according to any one of claims 1 to 10, wherein the thickness of the first partitions (82) is between 0.5 mm and 4 mm, the thickness of the first partitions (82) being measured according to the second direction (D_{C}).

12. The cascade according to any one of claims 1 to 11, also comprising stops positioned on the cascade (80) for stopping the translation of the first mobile partitions (82) in the first position.

13. A cascade thrust reversal device for a turbomachine of an aircraft, **characterised in that** it comprises at least one cascade (80) according to any one of claims 1 to 12.

14. A thrust reversal cascade device according to claim 13, wherein the actuator (94) of said at least one translation system (90) is configured to move the first mobile partitions (82) away from each other as far as the first position or move them more closely to each other as far as the second position in a synchronised manner with triggering of the thrust reversal device.

15. A turbomachine (1) intended to be mounted on an aircraft, the turbomachine (1) comprising a nacelle (2) in rotational symmetry defining an axial direction (D_{A}) and a radial direction (D_{R}), the nacelle (2) comprising a thickness according to the radial direction (D_{R}) and a housing (25) extending according to the axial direction (D_{A}) in its thickness for receiving a cascade (80) of a thrust reversal cascade device,
**characterised in that** it comprises a thrust reversal cascade device according to claim 13, the cascade (80) being arranged, when the thrust reversal is not required, in the corresponding housing (25) of the nacelle (2) of the turbomachine (1) with the first partitions (82) extending according to the axial direction (D_{A}) and the radial direction (D_{R}) and the second partitions (83) extending according to the radial direction (D_{R}) and according to a direction orthogonal to the axial direction (D_{A}) and to the radial direction (D_{R}), the first direction corresponding to the axial direction (D_{A}).

16. The turbomachine (1) according to claim 15, wherein the nacelle (2) comprises a perforated wall (254) forming a radially internal wall of the housing (25) and a reflecting wall (256) forming a radially external wall of the housing (25).

17. An aircraft comprising at least one turbomachine (1) according to any one of claims 15 or 16.
